# EUROPEAN PATENT APPLICATION

(11) **EP 3 339 173 A1**
(43) Date of publication of application: **27.06.2018**
(21) Application number: 17208248.9
(22) Date of filing: 18.12.2017
(51) Int. Cl.: B64D 11/00

(54) **ELECTRONIC DEVICE RETAINING APPARATUS**

(30) Priority: 23.12.2016 GB 201622196
(71) Applicant: Thompson Aero Seating Limited, Portadown, Armagh BT63 5QE (GB)
(72) Inventor: NEWELL, Keith, Moneymore, BT457WE (GB)
(74) Representative: FRKelly

(57) **Abstract**

An electronic device retaining apparatus for a passenger seat comprising a support which is coupleable to a passenger seat and a holder which is movably coupled to the support such that the holder is variable between first and second states and wherein a display device is mounted upon said support and a personal electronic device is releasably retainable upon the holder when it adopts the second state.

## Description

### Field of the Invention

This invention relates to an electronic device retaining apparatus and in particular to an electronic device retaining apparatus suitable for use with aircraft passenger seating.

### Background to the Invention

It is a common feature of long haul flights for passenger seats to include an in-flight entertainment (IFE) device such as a monitor or television for viewing visual media such as films during the flight. The IFE device is typically disposed upon the rear of the passenger seat so that the occupant of the seat located directly behind is facing towards the IFE device during the flight. The IFE device is typically disposed upon the rear of the headrest portion of the passenger seat such that it is at, or, near eye level for the viewer located in the seat behind. For those passengers who are located directly behind a bulkhead, an IFE device may be mounted upon the bulkhead wall or other support structure.

The available content for IFE devices is usually quite limited with the media typically having to be pre-installed at regular intervals onto on-board storage as the devices are not commonly connected to the internet. Therefore it has become a typical feature of flying that passengers download films, TV shows other media onto their own personal electronic devices (PEDs) prior to boarding the plane. This allows passengers to watch the media of their choice without being restricted to the in-flight options. However, to view media on their PEDs the passenger typically has to hold the device or prop the device up on the tray table for viewing. Neither of these viewing options is ideal. Firstly the passengers' arms can become tired holding the device, particularly if it is a larger electronic device such as a tablet and the duration of the flight is more than a few hours. Furthermore, positioning the device on the tray table is also undesirable as this requires the user to crane their neck downward, which over the course of a long haul flight lasting anywhere from 5 to 16 hours, can cause strain on the passengers neck. Additionally, none of the above options easily facilitate passengers which are located in adjacent seats being able to view media on the same PED.

Therefore it would be desirable to provide means which allows passengers to view media on PEDs during flights which do not require the passenger to hold the device and which also provides optimal viewing positioning.

### Summary of the Invention

Accordingly a first aspect of the invention provides an electronic device retaining apparatus for a passenger seat comprising a support which is coupleable to a passenger seat, a holder which is movably coupled to said support such that said holder is variable between first and second states, wherein a display device is mounted upon said support and wherein a personal electronic device is releasably retainable upon said holder when said holder adopts said second state.

Preferably, in said first state said holder adopts a non-retaining position in which the holder is retracted such that the rearward edge of said holder lies substantially flush with the rearward edge of said display device.

Ideally, in said second state said holder adopts a retaining position in which said holder is extended such that the rearward edge of said holder extends beyond the rearward most edge of said display device.

Preferably, said holder is resiliently coupled to said support.

Ideally, said holder is configured to urge towards said first state.

Preferably, said holder is shaped and dimensioned to comprise an elongate groove.

Ideally, said groove is configured to receive and retain said personal electronic device.

Preferably, said holder comprises at least a base portion and a side portion.

Ideally, said base portion extends along an axis which is perpendicular to the fore and aft directions whilst the side portion extends along the vertical axis from an opposing end of the base portion.

Preferably, said groove extends continuously along said base portion and the at least one side portion.

Ideally, said personal electronic device is positioned within said groove such that at least two side edges of the personal electronic device are located within the groove.

Preferably, said holder is substantially L-shaped.

Ideally, said support is pivotably coupleable to said passenger seat.

Preferably, said support is variable between an initial position and a pivoted position.

A second aspect of the invention provides a passenger seating arrangement comprising the electronic device embodying the first aspect of the invention.

Ideally, said seating arrangement comprises a recess which is shaped and dimensioned to receive electronic device retaining apparatus.

### Brief Description of the Drawings

The invention will now be described with reference to the following drawings in which like numerals are used to indicate like parts and in which,
Figure 1 is a perspective view of a passenger seating arrangement comprising an Electronic Device Retaining Apparatus (EDRA) shown in a first state;
Figure 2 is a perspective view of the passenger seating arrangement showing the EDRA in a second state;
Figure 3 is a rear view of the passenger seating arrangement showing the EDRA in the second state;
Figure 4 is a top sectional view of the passenger seating arrangement showing the EDRA therein;
Figure 5 is an exploded perspective view of the EDRA in relation to the passenger seating arrangement, wherein the EDRA is shown in the first state;
Figure 6 is an exploded perspective view of the EDRA in relation to the passenger seating arrangement, wherein the EDRA is shown in the second state;
Figure 7 is a side sectional view of the passenger seating arrangement showing the EDRA in the first state and with the EDRA also being shown in an initial position;
Figure 8 is a side sectional view of the passenger seating arrangement showing the EDRA in the second state and with the EDRA also being shown in the initial position;
Figure 9 is a side sectional view of the passenger seating arrangement showing the EDRA in the first state, with the EDRA also being shown in a pivoted position;
Figure 10 is a side sectional view of the passenger seating arrangement showing the EDRA in the second state, with the EDRA also being shown in the pivoted position.

### Detailed Description of the Drawings

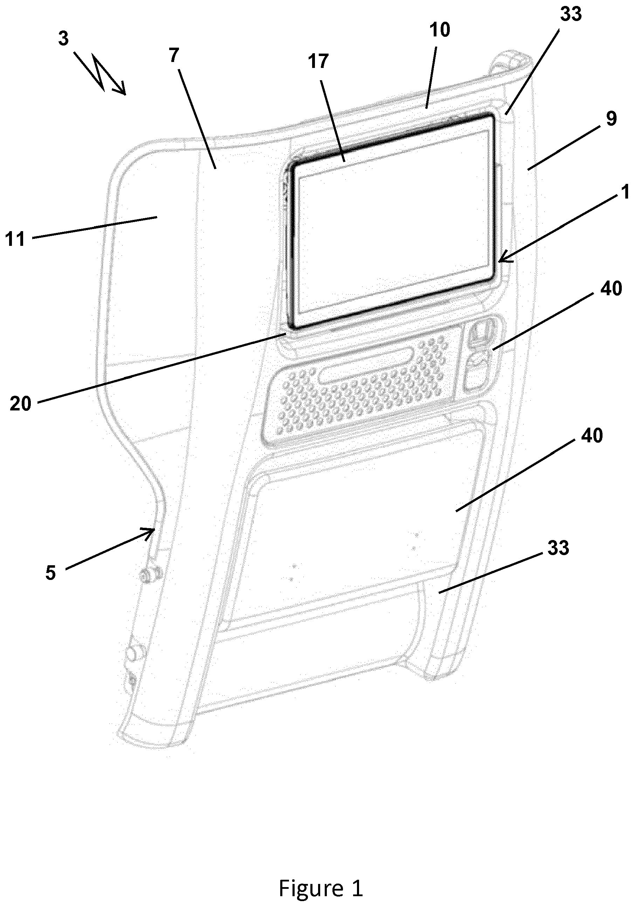

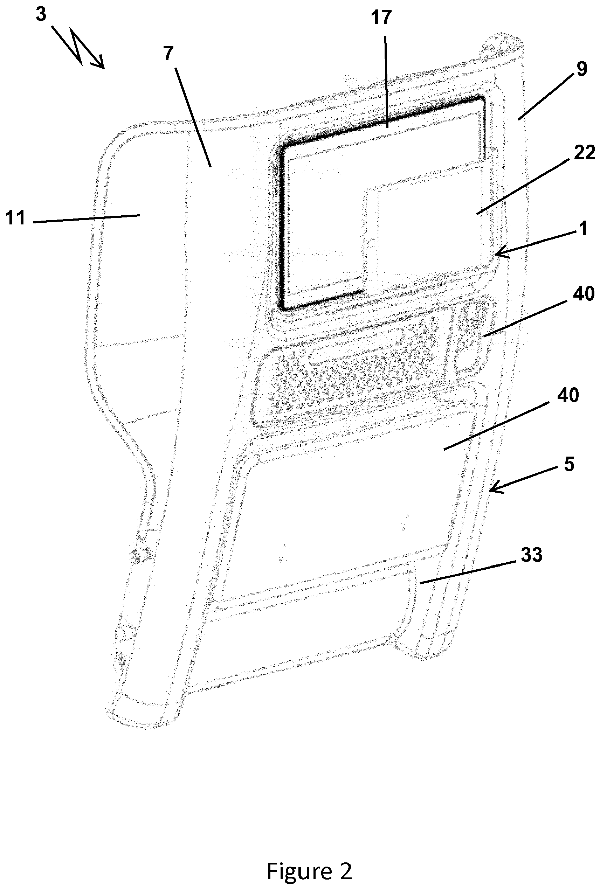

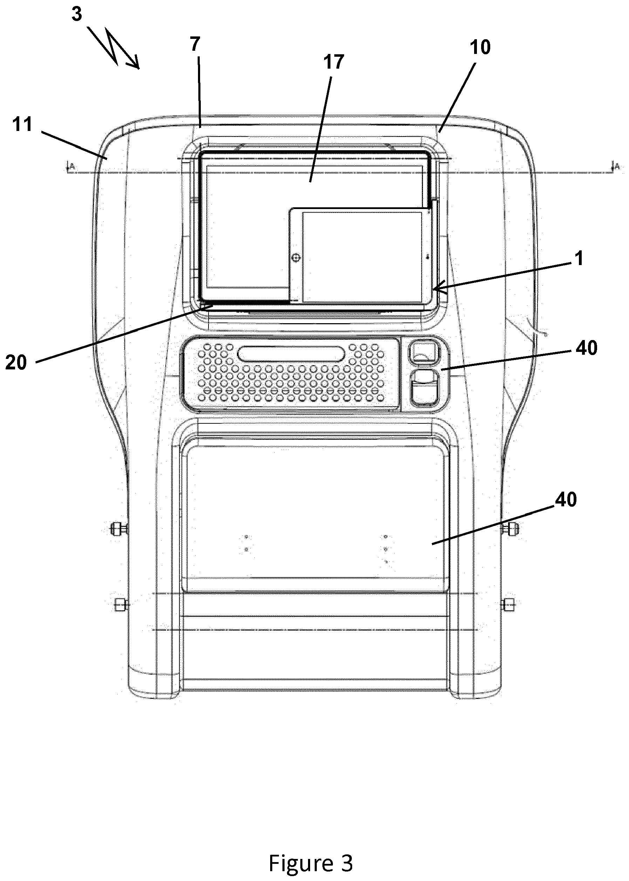

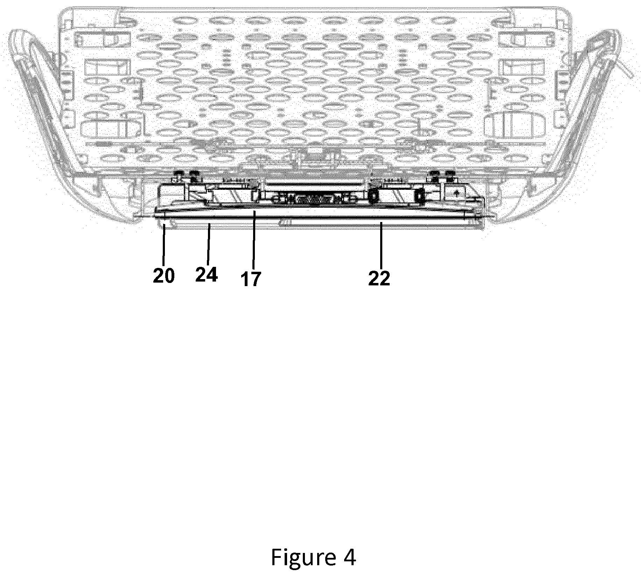

Referring now to the drawings in particular figures 1 to 10 there is shown, generally indicated by the reference numeral 1, an Electronic Device Retaining Apparatus (EDRA) embodying a first aspect of the invention. The EDRA 1 is shown in figures 1 to 10 as being part of a passenger seating arrangement 3 which embodies a second aspect of the invention. The passenger seating arrangement 3 is particularly suitable for use in vehicles (e.g. aircraft, boats, trains and buses) where the seating is located in a common passenger area, for example an aircraft cabin or train carriage, having one or more rows of seating where at least one seat is located directly behind or in front of another seat. In the following description, it is assumed that a seated passenger faces in a forward direction and so terms such as forward, front, rearward, rear and fore-and-aft are intended to be construed accordingly. The term "vertical" is intended to mean perpendicular to the surface on which the seating is located in-use.

The passenger seating arrangement 3 comprises at least one seat 5, usually a plurality of seating arrangements 3 are arranged in an array of one or more rows. Hence, at the rear of the seating arrangement 3 and/or in front and/or to the side of it there may be provided one or more additional seating arrangements 3. In a preferred embodiment at least a first seating arrangement 3 is positioned directly in front of a second seating arrangement 3, with both seating arrangements facing in the same direction. The EDRA 1 is typically coupled to the rear of the passenger seating arrangement(s) 3. Additionally when the seating arrangement 3 is installed in a cabin, a bulkhead (not shown) may be located in front of the seating arrangement 3 upon which the EDRA 1 may be disposed. Each seating arrangement typically comprises a shroud 7 within which the seat 5, at least in part, is located. To this end the shroud 7 typically partially surrounds the seat 5. The shroud 7 comprises at least a back portion 9 located behind the seat 5 and a base portion (not shown). The upper portion 10 of the back portion 9 defines a headrest for the seat occupant. The lateral edges 11, or at least part of the lateral edges 11 of the back portion 9 are typically shaped such as to partially surround the seat occupant. To this end the lateral edges 11 may be obliquely disposed with respect to the back portion 9 such that they extend in a substantially forward direction. It should be understood that portions of the seating arrangement 3 such as the base, armrests etc. have been removed from the drawings for reasons of clarity.

The EDRA 1 comprises a support 13 which may be coupled to the passenger seating arrangement 3, preferably to the rear of the passenger seating arrangement 3, such that it faces in the rearward direction. Typically, the support 13 is mounted directly or indirectly on the rear of the seating arrangement using any convenient convention fixing(s). Advantageously the EDRA 1 is located upon the rear of the seating arrangement 3 such that the occupant of another passenger seating arrangement 3 located directly behind may interact with the EDRA 1. The support 13 is configured to receive and retain a display device 17. To this end the support 13 comprises a bracket 15 upon which the display device 17 may be mounted. The display device 17 may comprise a television or computer monitor or any other suitable electronic visual display. To this end the bracket 15 is typically substantially planar. The display device 17 may be mounted thereon by a fastening arrangement 19 comprising one or more screws or corresponding nuts and bolts or any other suitable fixings or fastening arrangement.

The EDRA 1 further comprises a holder 20 that is movably coupled to the support 13 such that the holder 20 is variable, in particular movable, between first and second states. The holder 20 is preferably coupled to the base of the support 13 however it may alternatively or additionally be coupled to one or more sides of the support 13. The holder 20 is typically coupled to the support 13 by a sliding rail arrangement however it may alternatively be coupled by any other suitable movable coupling mechanism. The holder 20 is configured to releasably retain a personal electronic device 22 when the holder 20 adopts the second state. To this end the holder 20 is typically shaped and dimensioned, or otherwise configured, to comprise a recess or groove 24 within which the personal electronic device 22 may be located, at least in part, e.g. seated. The groove 24 is defined at least partly by a lip 27 which performs a retaining function as described in more detail hereinafter. The groove 24 is preferably provided in a base 30 of the holder 20. The lip 27 preferably extends at least partly along the base of the holder 20 and, in the illustrated embodiment, also extends upwardly along one side 32 of the holder 20 adjacent the base 30. In this case the groove 24 may be said to extend along the base and a side adjacent to the base. In alternative embodiments, the groove (and optionally the lip) may extend along the base 30 only, or along one or more sides 32 only, or along the base and the respective side at each end of the base. The groove 24 is shaped and dimensioned to receive and retain the personal electronic device 22. In preferred embodiments the groove 24 is adapted to seat a side or end of the device 22. The holder 20 (or more particularly the base of the holder in preferred embodiments) further comprises forward and rearward edges 21 and 23 along with side edges 25. The personal electronic device 22 may be a smartphone or tablet or e-reader or any other suitable electronic device.

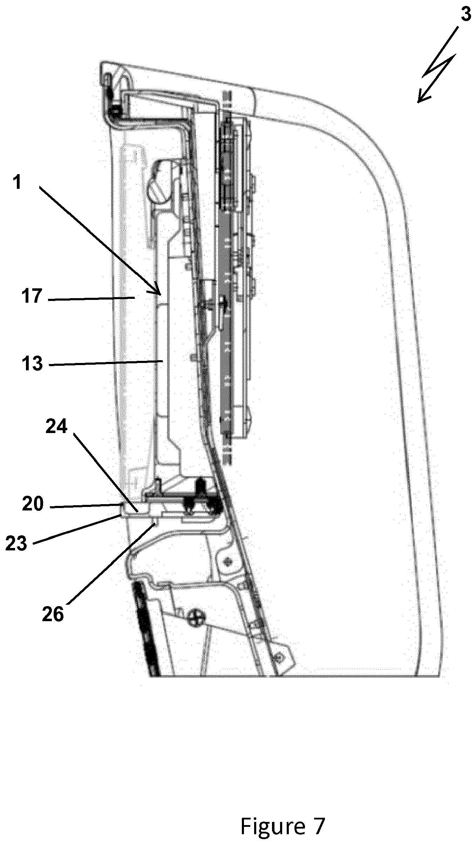

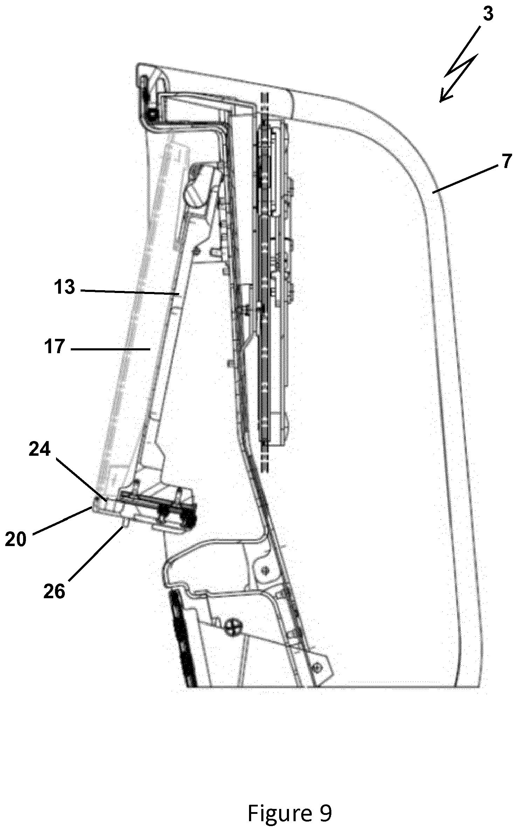

In the first state, as shown in figures 7 and 9 the display device 17 is mounted upon the support 13, the holder 20 adopts a non-retaining position in which the holder 20 is retracted such that the groove 24 is not presented, at least not to the extent that it can receive the electronic device 22. In the illustrated embodiment the rearward edge 23 lies substantially flush with the rearward most edge of the display device 17 in the first state. In this state the lip 27 is typically located against the display device 17. Accordingly in the first state the holder 20 is retracted and the personal electronic device 22 cannot be seated in the groove 24. Advantageously, when in the first state the holder 20 lies flush with the display of the display device 26 such as to form a continuous level surface; this ensures that no edges protrude outwardly which may pose a safety risk for the occupant of the passenger seating arrangement 3, particularly in a crash scenario where the occupants head is likely to contact the rear of the forward seat. This arrangement is particularly advantageous for implementation in aircraft were space is limited, where in the event of a crash, the path which the occupant's head path is most likely to trace will result in the user's head contacting the rear of the forward seating, typically at or near the location of the display device 17. Advantageously, as the holder 20 lies flush with the display device 17 in the first state the user's head can travel a relatively unobstructed path in such a scenario thereby reducing the risk of injury. Furthermore aircraft passenger seating have to meet a number of regulatory requirements pertaining to passenger safety, one of which is that the seating has to be deformable to a certain degree to absorb impact energy in the event of a crash. For example typically were head contact with seats or other structure can occur, protection must be provided so that the head impact does not exceed a Head Injury Criterion (HIC) of 1000 units. The level of HIC is defined by the complex mathematical integration based on the accelerations experienced by the instrumented anthropomorphic test device (ATD) and the time intervals involved. By ensuring no protruding edges are exposed when the holder 20 is in the first state the EDRA 1 aids in compliance with the relevant seating regulations.

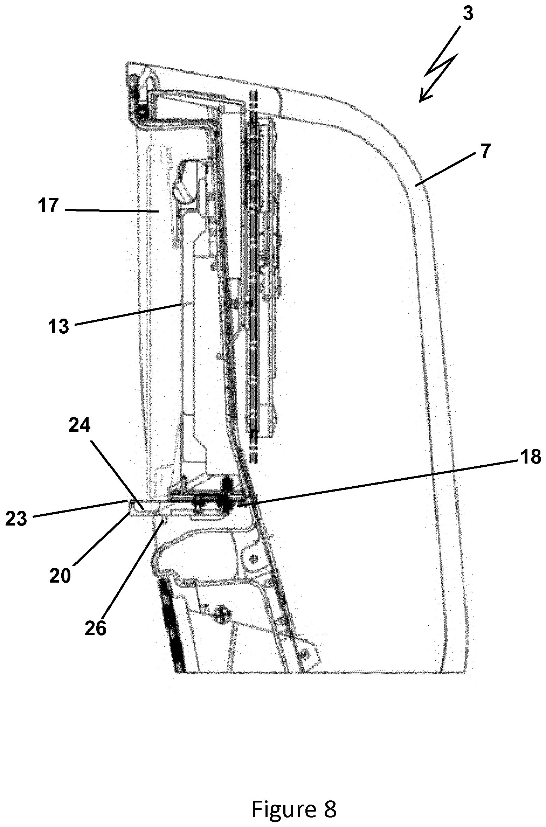

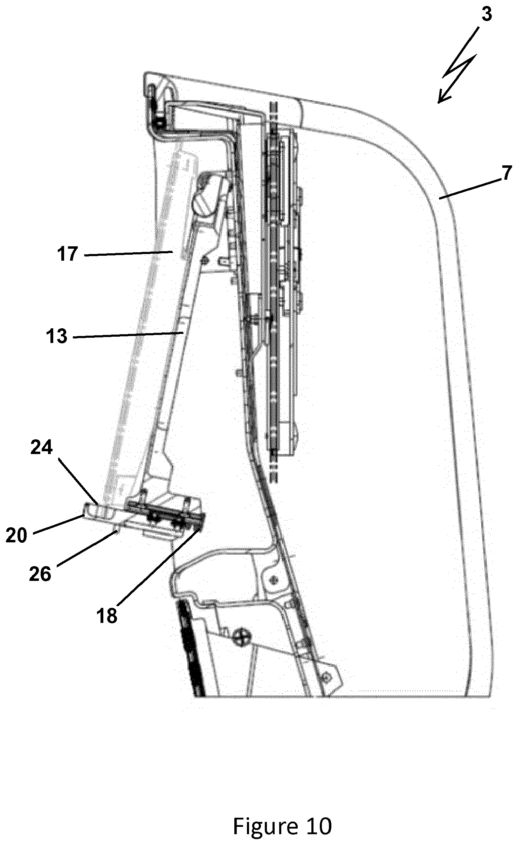

In the second state, as shown in figures 8 and 10, the display device 17 is mounted upon the support 13 and the holder 20 adopts a retaining position in which the holder 20 is extended such that the groove 24 is presented to receive the electronic device 22. The lip 27 is spaced apart from the display device 17. In the illustrated embodiment the rearward edge 23 of the holder 20 extends beyond the rearward most edge of the display device 17 in the second state. Accordingly, in the second state wherein the holder 20 is extended, the personal electronic device 22 may be seated in the groove 24 between the lip 27 and the display device 17. The holder 20 is variable between the first and second states by a handle which may comprise a protuberance 26. The protuberance 26 is mounted upon the holder 20, typically upon a bottom face of the holder 20, and is configured such that a user may grip the protuberance 26 to vary the holder 20 between the first and second states in-use.

In a preferred embodiment the movable coupling mechanism between the holder 20 and the support 13 preferably includes resilient biasing means 18, such as one or more springs. The resilient biasing means 18 is preferably configured to urge the holder 20 towards the first state. Therefore when the holder 20 adopts the second state and an electronic device 22 is located within the groove 24 the personal electronic device 22 is held against the display device 17 by the lip 27 such that the personal electronic device 22 is securely retained upon the holder 20 in the second state. Advantageously the display device 17, more particularly the display thereof, performs as a clamping surface against which the personal electronic device 22 is retained. Additionally, if the holder 20 adopts the second state and the personal electronic device 22 is not inserted within the groove 24, the resilient bias causes the holder 20 to adopt the first state. The biasing of the movable coupling mechanism may be configured such that the transition between the holder adopting the first state from the second state is damped such that user is not required to secure the holder 20 in the second state using the protuberance 26 when inserting their personal electronic device 22. Alternatively, the biasing of the movable coupling mechanism may be configured such that the user is required to secure the holder 20 in the second state by the protuberance 26 to insert their personal electronic device 22. The groove 24 of the holder 20 is shaped and dimensioned such that personal electronic devices 22 of varying dimensions may be inserted therein. Advantageously the biasing movement of the holder 20 is configured such that personal electronic devices 22 which are of smaller depth and which do not occupy the full dimensions of the groove 24 are securely held against the display device 17 in co-operation with the groove 24.

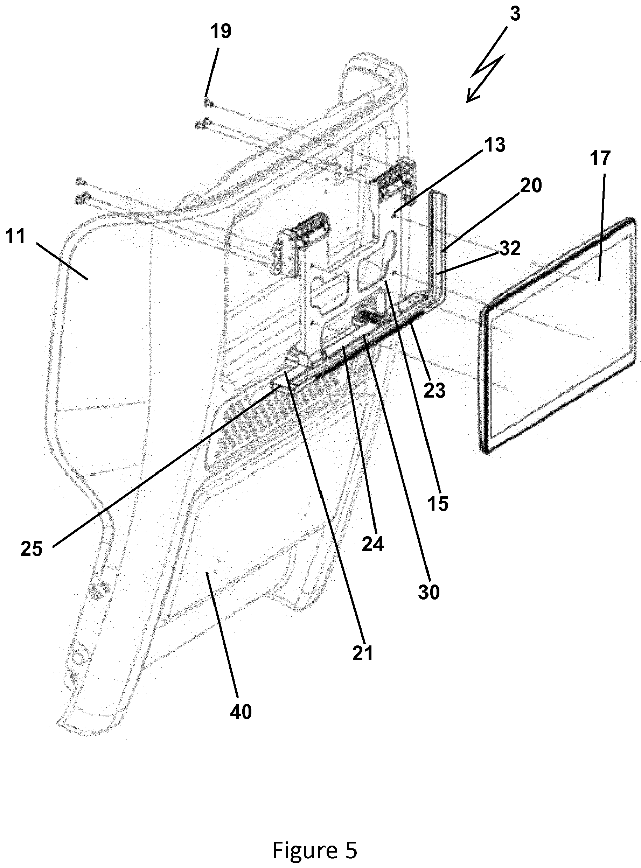

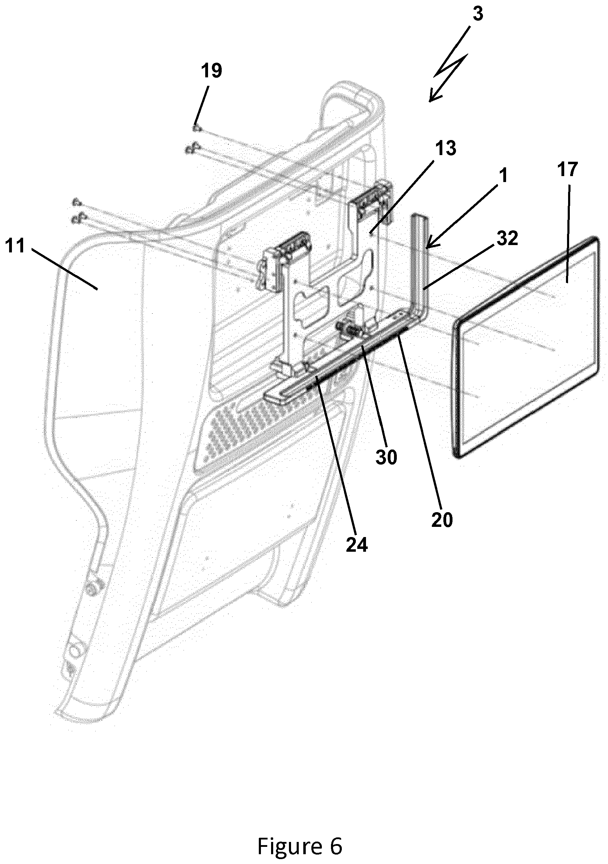

In a preferred embodiment, as shown in figures 5 and 6 the holder 20 is substantially L shaped comprising a base portion 30 and a side portion 32. The base portion 30 extends along an axis which is perpendicular to the fore and aft directions whilst the side portion 32 extends along the vertical axis from an end of the base portion 30. The groove 24 typically comprises an elongate channel which extends substantially along the length of the holder 20, upon a top face of the holder 20. To this end the groove 24 preferably extends continuously along the base portion 30 and the at least one side portion 32. The personal electronic device 22 is positioned within the groove 24 such that at least two sides of the personal electronic device 22 are retained, at least in part, within the groove 24. Additionally, the groove 24 may be substantially U or square shaped in cross section. In alternative embodiments (not shown) the holder 20 may be substantially U or square or rectangular shaped.

Preferably the EDRA 1 is pivotably coupled to the seating arrangement 3 such that it may be varied, or more particularly moved, between a plurality of positions about a pivot axis which is perpendicular to the front to rear directions, the pivot axis being defined by the pivotable coupling of the EDRA 1 to the seating arrangement 3. To this end the EDRA is ideally coupled to the seating arrangement 3 by one or more hinges 35 however it may alternatively coupled by any other suitable pivotable coupling arrangement. The support 13 is typically pivotably coupled to the seating arrangement 3. As the EDRA 1 is varied between the plurality of positions so to is the display device 17 and the personal electronic device 22 when it is retained thereon, advantageously this allows the user to position the display device 17 and personal electronic device 22 at the best viewing angle in-use.

In a preferred embodiment, the EDRA 1 is pivotable between an initial position in which it is located against or relatively close to the rear of the seat 3 (as shown in figures 7 and 8) and a pivoted position in which projects outwardly from the rear of the seat (as shown in figures 9 and 10). The pivot axis is preferably at the top of the EDRA 1 and so the base of the EDRA projects outwardly in the pivoted position. Additionally the EDRA 1 may be pivotable between a plurality of intermediary pivoted positions (not shown) between the initial position and the pivoted position. The EDRA 1 is typically includes a locking mechanism (not shown) such that it may be locked in any of the initial, pivoted or intermediary positions. As shown in figures 7 and 8 in the initial position the support 13 of the EDRA 1 is disposed such that it extends substantially parallel to the vertical axis, with the holder 20 extending along the axis defined by the fore and aft directions. As shown in figures 9 and 10 in the pivoted position and any intermediary pivoted position the support 13 is obliquely disposed relative to the vertical axis. The EDRA 1 is typically variable between the initial, pivoted or intermediary positions by the protuberance 26 in-use. Advantageously, in any of the initial, pivoted or intermediary positions the holder 20 is variable between the first and second states. Advantageously the coupling between the holder 20 and the support 13 is such that the holder and support move together during the pivoting movement of the EDRA 1.

The back portion 9 of the seating arrangement 3 is shaped and dimensioned to comprise one or more recesses 33. The back portion 9 may comprise a singular recess 33 or more preferably a plurality of distinct recesses 13 located along the length of the back portion 9 from the bottom up which may be separated by one or more dividing portions 35. The EDRA 1 may be located within the recesses 33, preferably within a recess 33 which is located at or near the rear of the upper portion 10 which defines the headrest. Advantageously by locating the EDRA 1 at the rear of the upper portion 10 on the seating arrangement 3 the EDRA 1 is located at or substantially near the eye level of the occupant of the seating arrangement 3 located directly there behind. Advantageously the screen of the display device 17 when mounted upon the support 17 lies substantially flush with the edges of the recess 33 in the initial position. The degree of pivoting movement of the EDRA 1 relative to the seating arrangement 3 is determined by the dimensions of the display device 17 and the dimensions of the recess 33 within which the EDRA 1 is disposed.

The recesses 33 may additionally include one or more passenger interactive apparatus 40 which are typically located at a lower position upon the passenger seating arrangement 3 than the EDRA 1. The one or more passenger interactive apparatus 40 may comprise a tray table, and/or one or more interface arrangements which are configured to allow the occupant of the seating arrangement 3 behind to interact with the display device 17 such as a controller or keyboard or any other suitable interface arrangement.

In-use the EDRA 1 may be mounted upon the rear of a first seating arrangement 3 located within a plane or train or the like. An occupant of a second seating arrangement 3 located directly behind the first is operable to view the display device 17 mounted upon the support 13. If the occupant of the second seating arrangement 3 desires to watch media stored on their personal electronic device 22 they may vary the holder 20 from the first state to the second state, typically using the protuberance 26, and insert the personal electronic device 22 within the groove 24, whereupon the resilient biasing means 18 which is configured to urge the holder 20 towards the first state will ensure that the personal electronic device 22 is securely retained upon the holder 20. Whilst the personal electronic device 22 is retained upon the holder 20 the occupant may vary the EDRA 1 from the initial position to the pivoted position or one of the intermediary positions to obtain the best viewing angle. When the occupant removes their personal electronic device 22 from the holder 20 the holder 20 is configured to adopt the first state. Advantageously the EDRA 1 allows the seat occupant to best position both the display device 17 and the personal electronic device 22 for viewing in-use.

The invention is not limited to the embodiment(s) described herein but can be amended or modified without departing from the scope of the present invention.

## Claims

1. An electronic device retaining apparatus for a passenger seat, the apparatus comprising:
a support adapted to hold a display device; and
a holder movably coupled to said support for movement between first and second states,
wherein, in said second state, said holder is adapted to hold a personal electronic device.

2. The apparatus of claim 1, wherein in said second state, said holder holds, in use, said personal electronic device in front of the display device held by said support.

3. The apparatus of claim 1 or 2, wherein in said second state, said holder holds, in use, said personal electronic device against the display device held by said support.

4. The apparatus of any preceding claim, wherein in said second state, said holder is configured to provide a groove for seating said personal electronic device; and/or
wherein said groove is presented for receiving said personal electronic device in said second state but not in said first state.

5. The apparatus of any preceding claim, wherein said holder includes a lip for retaining said personal electronic device and/or
wherein said lip extends at least partly along an outer side of said groove; and/or
wherein said groove and/or said lip extends along a base of said holder; and/or
wherein said groove and/or said lip extends along one or more sides of said holder.

6. The apparatus of any preceding claim, wherein said holder is resiliently biased to hold personal electronic device against the display device held by said support in use; and/or
wherein said holder is resiliently biased to adopt said first state.

7. The apparatus of any preceding claim, wherein the holder is extendable and retractable with respect to the support, adopting a retracted position in said first state and an extended position in said second state; and/or
wherein said holder includes a base that is retracted beneath said support in said first state and projects from said support in said second state.

8. The apparatus of any preceding claim, wherein at least part of said groove is defined by a base of the holder and a lip extending at least partly along said base, preferably along an outer side of the base; and/or
wherein at least part of said groove is defined by a side of the holder and a lip extending at least partly along said side, preferably along an outer edge of the side.

9. The apparatus of any preceding claim, wherein in said first state said holder adopts a non-retaining position wherein the holder is retracted such that the rearward edge of said holder lies substantially flush with the rearward edge of said display device; and/or
wherein in said second state said holder adopts a retaining position wherein said holder is extended such that the rearward edge of said holder extends beyond the rearward edge of said display device; and/or
wherein said holder is coupled to said support by a resiliently biased coupling mechanism biased to urge said holder towards the first state.

10. The apparatus of any preceding claim, wherein said holder is shaped and dimensioned to comprise an elongate groove; and/or
wherein said groove is configured to receive and retain said personal electronic device.

11. The apparatus of any preceding claim, wherein said holder comprises at least a base portion and a side portion; and/or
wherein said base portion extends along an axis which is perpendicular to the fore and aft directions whilst the side portion extends along the vertical axis from an end of the base portion.

12. The apparatus of any preceding claim, wherein said groove extends continuously along said base portion and the at least one side portion; and/or
wherein said groove is configured such that, in use, at least two side edges of the personal electronic device are located within the groove; and/or
wherein said holder is substantially L-shaped.

13. The apparatus of any preceding claim, mounted on said passenger seat, preferably on a rearward facing portion of said passenger seat.

14. The apparatus of any preceding claim, wherein said support is pivotably coupled to said passenger seat.

15. Passenger seating comprising the electronic device retaining apparatus as claimed in claim 1; and/or wherein said seating arrangement comprises a recess which is shaped and dimensioned to receive said electronic device retaining apparatus.
